# EUROPEAN PATENT SPECIFICATION

(11) **EP 2 857 372 B1**
(45) Date of publication and mention of the grant of the patent: **15.08.2018**
(21) Application number: 13794636.4
(22) Date of filing: 24.05.2013
(51) Int. Cl.: B32B 17/10, C03C 27/12, C08K 5/00, C08K 5/3492, C08F 8/04, C08F 8/42, C08F 297/04, C08K 5/3435, C08L 53/02, C08F 287/00, C09J 153/02, C09J 5/00

(54) **GLASS LAMINATE, AND METHOD FOR USING BLOCK COPOLYMER HYDROGENATION PRODUCT AS BINDER FOR GLASS LAMINATE**
VERBUNDGLAS UND VERFAHREN ZUR VERWENDUNG EINES BLOCKCOPOLYMERHYDRIERUNGSPRODUKTS ALS BINDEMITTEL FÜR VERBUNDGLAS
STRATIFIÉ DE VERRE, ET PROCÉDÉ D'UTILISATION DU PRODUIT D'HYDROGÉNATION D'UN COPOLYMÈRE SÉQUENCÉ À TITRE DE LIANT POUR STRATIFIÉ DE VERRE

(30) Priority: 25.05.2012 JP 2012119219
(43) Date of publication of application: 08.04.2015
(73) Proprietor: Zeon Corporation, Tokyo 100-8246 (JP)
(72) Inventor: KOHARA Teiji, Tokyo 100-8246 (JP); TANAHASHI Naoki, Tokyo 100-8246 (JP)
(74) Representative: Maiwald Patent- und Rechtsanwaltsgesellschaft mbH
(86) International application number: PCT/JP2013/064494
(87) International publication number: WO 2013/176258

(56) References cited:
- WO-A1-89/11512
- WO-A1-2011/096389
- DE-A1-102006 059 295
- JP-A- H0 930 847
- JP-A- S61 247 646
- JP-A- 2011 073 943

## Description

### TECHNICAL FIELD

The invention relates to laminated glass obtained by integrally bonding multiple layers of glass through an adhesive that includes an alkoxysilyl group-containing hydrogenated block copolymer.

### BACKGROUND ART

Laminated glass obtained by bonding multiple layers of glass through an interlayer film (e.g., resin film) has been known. Laminated glass exhibits excellent penetration resistance and thermal shock resistance, and has been widely used as automotive glass, security (safety) glass, and the like.

A polyvinyl butyral-based resin has been most generally used as a material for forming the interlayer of laminated glass. However, the polyvinyl butyral-based resin has problems in that (i) the glass sheet may be displaced, or air bubbles may occur after bonding due to heat since the polyvinyl butyral-based resin has a relatively low softening point, and (ii) whitening may gradually occur from the peripheral area, and the adhesion to glass may decrease when the laminated glass is subjected to a high-humidity atmosphere for a long time since the polyvinyl butyral-based resin has high hygroscopicity. The polyvinyl butyral-based resin has another problem in that (iii) it is necessary to strictly control the water content before bonding the glass sheets in order to control the adhesion to glass (see Non-patent Document 1).

In order to solve the above problems, Patent Document 1 proposes laminated glass that is obtained by providing a thermosetting resin (thermosetting resin layer) that is obtained by adding an organic peroxide to an ethylene-vinyl acetate copolymer, between two glass sheets, and thermally curing the thermosetting resin layer, and Patent Document 2 proposes laminated glass that is obtained by bonding glass sheets using an acid-modified saponified ethylene-vinyl acetate copolymer.

However, laminated glass that utilizes an ethylene-vinyl acetate copolymer does not necessarily exhibit sufficient impact resistance and penetration resistance.

Patent Document 3 proposes laminated glass that utilizes a thermosetting resin obtained by adding an organic peroxide and a silane coupling agent to a ternary block copolymer that includes end blocks formed of a polymer of an aromatic vinyl compound, and a middle block formed of a conjugated diene polymer.

Patent Document 4 discloses using a hydrogenated block copolymer obtained by hydrogenating 90% or more of unsaturated bonds of a block copolymer as a solar cell sealing material, the block copolymer including at least two polymer blocks [A] and at least one polymer block [B], the polymer block [B] including a repeating unit derived from a linear conjugated diene compound as the main component, and the ratio (wA:wB) of the weight fraction wA of the polymer block [A] in the block copolymer to the weight fraction wB of the polymer block [B] in the block copolymer being 30:70 to 60:40.

Patent Document 5 discloses a laminated glass in which a thermoplastic styrene block copolymer hydride similar to the block copolymer hydride of the present invention is used as an adhesive.

Patent Document 6 discloses "A pressure sensitive adhesive composition characterized in that it comprises a cross-linkable silane-modified styrene ABA block copolymer having a saturated aliphatic midblock" (claim 1).

Patent Document 7 discloses a laminated glass comprising a plural number of glass plates integrated via transparent resin intermediate blocks, of which the main body is a block copolymer including terminal polymer blocks of aromatic vinyl compounds hydride to the extent of 10% and intermediate blocks of conjugated diene polymers hydrogenated as much as 90%.

And patent Document 8 discloses a method for producing a laminate glass comprising (A) a step of obtaining a laminate glass intermediate film, (B) a step of laminating the intermediate film by sandwiching the intermediate film with glass bases, (C) a step of preliminary adhering with heating under reduced pressure, and (D) a step of bonding by pressurizing and heating, wherein the glass intermediate film comprises a copolymer including an α-olefin and ethylenically unsaturated silane compounds as co-monomers.

### RELATED-ART DOCUMENT

### PATENT DOCUMENT

Patent Document 1: JP-A-57-196747
Patent Document 2: JP-A-4-198046
Patent Document 3: JP-A-9-030847
Patent Document 4: WO2011/096389 (US2013/0008506A1)
Patent Document 5: DE 10 2006 059295 A1
Patent Document 6: WO 89/11512 A1
Patent Document 7: JP-A-S61-247646
Patent Document 8: JP-A-2011-073943

### NON-PATENT DOCUMENT

Non-patent Document 1: Yasuyuki Fujisaki, Nikkakyo Geppo (Japan Chemical Industry Association monthly), 35 (10), 28 (1982)

### SUMMARY OF THE INVENTION

### TECHNICAL PROBLEM

An object of the invention is to provide laminated glass that utilizes an adhesive that allows easy handling, exhibits excellent adhesion to glass, excellent light resistance, excellent heat resistance, excellent transparency, and low birefringence, and can maintain high adhesion even in a high temperature/high humidity environment, and a method that uses the adhesive as an adhesive for laminated glass.

### SOLUTION TO PROBLEM

Patent Document 3 states that laminated glass that utilizes a thermosetting resin obtained by adding an organic peroxide and a silane coupling agent to a ternary block copolymer that includes end blocks formed of a polymer of an aromatic vinyl compound, and a middle block formed of a conjugated diene polymer, exhibits excellent impact resistance and penetration resistance.

However, since a thermosetting resin that includes an organic peroxide exhibits inferior long-term storage stability, heat resistance, and light resistance, and normally requires heating in order to effect a curing reaction, coloration may occur, and transparency may be impaired depending on the heating temperature and the heating time, or a decrease in adhesion may occur under high-temperature/high-humidity conditions.

When using the ternary block copolymer disclosed in Patent Document 3, (α) it may be difficult to bond the ternary block copolymer to glass in the absence of an organic peroxide even if a silane coupling agent is used, (β) it may be difficult to ensure sufficient heat resistance since the end blocks formed of a polymer of an aromatic vinyl compound have a low glass transition temperature, and (γ) it may be difficult to ensure sufficient light resistance since the ternary block copolymer includes a number of carbon-carbon double bonds.

The inventors of the invention conducted extensive studies, and found that an adhesive that includes an alkoxysilyl group-containing hydrogenated block copolymer [3] obtained by reacting a hydrogenated block copolymer [2] that is obtained by hydrogenating the carbon-carbon unsaturated bonds of a specific block copolymer [1] with an ethylenically unsaturated silane compound in the presence of a peroxide, ensures excellent adhesion between layers of glass, exhibits excellent light resistance, excellent heat resistance, and excellent optical properties, does not require water content control and the like for controlling adhesion between layers of glass, allows easy handling, and exhibits stable adhesion. The inventors also found that excellent laminated glass can be obtained by utilizing the adhesive even if a curing step using an organic peroxide is not performed. These findings have led to the completion of the invention.

Several aspects of the invention provide the following laminated glass (see (1) to (3)), and a method that includes using a hydrogenated block copolymer as an adhesive for laminated glass (see (4)).
(1) Laminated glass obtained by integrally bonding glass sheets through an adhesive, the adhesive including a hydrogenated block copolymer [3] obtained by introducing an alkoxysilyl group into a hydrogenated block copolymer [2] that is obtained by hydrogenating 90% or more of carbon-carbon unsaturated bonds included in the main chain, the side chain, and the aromatic ring of a block copolymer [1] that includes at least two polymer blocks [A] and at least one polymer block [B], the polymer block [A] including a repeating unit derived from an aromatic vinyl compound as the main component, the polymer block [B] including a repeating unit derived from a linear conjugated diene compound as the main component, and the ratio (wA:wB) of the weight fraction wA of the polymer block [A] in the block copolymer [1] to the weight fraction wB of the polymer block [B] in the block copolymer [1] being 30:70 to 60:40.
(2) The laminated glass according to (1), wherein the adhesive further includes a hindered amine-based light stabilizer in an amount of 0.02 to 2.5 parts by weight based on 100 parts by weight of the hydrogenated block copolymer [3].
(3) The laminated glass according to (1), wherein the adhesive further includes a UV absorber in an amount of 0.02 to 1 part by weight based on 100 parts by weight of the hydrogenated block copolymer [3].
(4) A method including using a hydrogenated block copolymer [3] as an adhesive for laminated glass, the hydrogenated block copolymer [3] being obtained by introducing an alkoxysilyl group into a hydrogenated block copolymer [2] that is obtained by hydrogenating 90% or more of carbon-carbon unsaturated bonds included in the main chain, the side chain, and the aromatic ring of a block copolymer [1] that includes at least two polymer blocks [A] and at least one polymer block [B], the polymer block [A] including a repeating unit derived from an aromatic vinyl compound as the main component, the polymer block [B] including a repeating unit derived from a linear conjugated diene compound as the main component, and the ratio (wA:wB) of the weight fraction wA of the polymer block [A] in the block copolymer [1] to the weight fraction wB of the polymer block [B] in the block copolymer [1] being 30:70 to 60:40.

### ADVANTAGEOUS EFFECTS OF THE INVENTION

Since the hydrogenated block copolymer [3] used in connection with the aspects of the invention includes the polymer block [A] that has a high glass transition temperature and exhibits excellent heat resistance, and the polymer block [B] that has a low glass transition temperature and exhibits excellent flexibility, the adhesive that includes the hydrogenated block copolymer [3] exhibits excellent heat resistance, excellent low-temperature flexibility, low hygroscopicity, excellent transparency, low birefringence, excellent weatherability, and excellent adhesion to glass, a metal, and the like. In particular, the adhesive can maintain high adhesion to glass, a metal, and the like even when subjected to a high-temperature/high-humidity environment. Therefore, the laminated glass according to one aspect of the invention exhibits excellent durability.

Moreover, it is unnecessary to perform a special process (e.g., water content adjustment) before bonding the adhesive used in connection with the aspects of the invention to glass, and it is possible to directly use the adhesive that has been stored in a normal temperature/normal humidity environment for a long time. Therefore, it is easy to store and handle the adhesive.

### DESCRIPTION OF EMBODIMENTS

Exemplary embodiments of the invention are described in detail below.

### 1) Laminated glass

Laminated glass according to one embodiment of the invention is obtained by integrally bonding glass sheets through an adhesive that includes a hydrogenated block copolymer [3].

The adhesive used in connection with one embodiment of the invention may include only the hydrogenated block copolymer [3], or may include the hydrogenated block copolymer [3] and an additive (described later) (hereinafter may be collectively referred to as "adhesive") as long as the adhesive includes the hydrogenated block copolymer [3]. The content of the hydrogenated block copolymer [3] in the adhesive is normally 60 wt% or more, preferably 80 wt% or more, and more preferably 90 wt% or more, based on the entire adhesive. When the content of the hydrogenated block copolymer [3] in the adhesive is 60 wt% or more, the adhesive exhibits excellent heat resistance, excellent low-temperature flexibility, low hygroscopicity, excellent transparency, low birefringence, excellent weatherability, and excellent adhesion to glass, a metal, and the like.

The hydrogenated block copolymer [3] is obtained by introducing an alkoxysilyl group into a hydrogenated block copolymer [2] that is obtained by hydrogenating 90% or more of carbon-carbon unsaturated bonds included in the main chain, the side chain, and the aromatic ring of a block copolymer [1] that includes at least two polymer blocks [A] and at least one polymer block [B], the polymer block [A] including a repeating unit derived from an aromatic vinyl compound as the main component, the polymer block [B] including a repeating unit derived from a linear conjugated diene compound as the main component, and the ratio (wA:wB) of the weight fraction wA of the polymer block [A] in the block copolymer [1] to the weight fraction wB of the polymer block [B] in the block copolymer [1] being 30:70 to 60:40.

### (1) Block copolymer [1]

The block copolymer [1] that is a precursor of the hydrogenated block copolymer [3] includes at least two polymer blocks [A] and at least one polymer block [B].

The number of polymer blocks [A] included in the block copolymer [1] is normally 5 or less, preferably 4 or less, and more preferably 3 or less.

The block copolymer [1] may be a chain block copolymer or a radial block copolymer. It is preferable that the block copolymer [1] be a chain block copolymer since the block copolymer [1] exhibits excellent mechanical strength.

It is most preferable that the block copolymer [1] be a [A]-[B]-[A] triblock copolymer in which the polymer block [A] is bonded to each end of the polymer block [B], or a [A]-[B]-[A]-[B]-[A] pentablock copolymer in which the polymer block [B] is bonded to each end of the polymer block [A], and the polymer block [A] is bonded to the other end of each polymer block [B].

The polymer block [A] includes the repeating unit derived from an aromatic vinyl compound as the main component. The content of the repeating unit derived from an aromatic vinyl compound in the polymer block [A] is normally 90 wt% or more, preferably 95 wt% or more, and more preferably 99 wt% or more. If the content of the repeating unit derived from an aromatic vinyl compound in the polymer block [A] is too low, the laminated glass may exhibit low heat resistance.

A plurality of polymer blocks [A] may be either identical or different as long as the above range is satisfied.

Specific examples of the aromatic vinyl compound include styrene, α-methylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene, 4-monochlorostyrene, dichlorostyrene, 4-monofluorostyrene, 4-phenylstyrene, and the like. Among these, aromatic vinyl compounds that do not include a polar group are preferable from the viewpoint of hygroscopicity, and styrene is particularly preferable.

The polymer block [A] may include a repeating unit derived from a linear conjugated diene compound and/or a repeating unit derived from a vinyl compound other than the aromatic vinyl compound (hereinafter may be referred to as "additional vinyl compound") in addition to the repeating unit derived from the aromatic vinyl compound. The content of the repeating unit derived from a linear conjugated diene compound and/or the repeating unit derived from the additional vinyl compound in the polymer block [A] is normally 10 wt% or less, preferably 5 wt% or less, and more preferably 1 wt% or less. Examples of the linear conjugated diene and the additional vinyl compound include those mentioned below in connection with the polymer block [B].

The polymer block [B] includes the repeating unit derived from a linear conjugated diene compound as the main component. The content of the repeating unit derived from a linear conjugated diene compound in the polymer block [B] is normally 90 wt% or more, preferably 95 wt% or more, and more preferably 99 wt% or more. When the content of the repeating unit derived from a linear conjugated diene compound is within the above range, the laminated glass exhibits excellent thermal shock resistance and excellent low-temperature adhesion. The polymer block [B] may include a repeating unit derived from an aromatic vinyl compound and/or a repeating unit derived from a vinyl compound other than the aromatic vinyl compound (hereinafter may be referred to as "additional vinyl compound") in addition to the repeating unit derived from a linear conjugated diene compound. The content of the repeating unit derived from an aromatic vinyl compound and/or the repeating unit derived from the additional vinyl compound in the polymer block [B] is normally 10 wt% or less, preferably 5 wt% or less, and more preferably 1 wt% or less. If the content of the repeating unit derived from an aromatic vinyl compound in the polymer block [B] is high, the adhesive resin layer may exhibit poor low-temperature flexibility, and the laminated glass may exhibit low heat resistance.

When the block copolymer [1] includes a plurality of polymer blocks [B], the plurality of polymer blocks [B] may be either identical or different as long as the above range is satisfied.

Specific examples of the linear conjugated diene compound include 1,3-butadiene, isoprene, 2,3-dimethyl-1,3-butadiene, 1,3-pentadiene, and the like. Among these, linear conjugated diene compounds that do not include a polar group are preferable from the viewpoint of hygroscopicity, and 1,3-butadiene and isoprene are particularly preferable.

Examples of the additional vinyl compound include linear vinyl compounds and cyclic vinyl compounds. The additional vinyl compound may be a vinyl compound that includes a nitrile group, an alkoxycarbonyl group, a hydroxycarbonyl group, or a halogen group and/or an unsaturated cyclic acid anhydride or an unsaturated imide compound. Among these, vinyl compounds that do not include a polar group, such as linear olefins such as ethylene, propylene, 1-butene, 1-pentene, 1-hexene, 1-heptene, 1-octene, 1-nonene, 1-decene, 1-dodecene, 1-eicosene, 4-methyl-1-pentene, and 4,6-dimethyl-1-heptene; and cyclic olefins such as vinylcyclohexane are preferable from the viewpoint of hygroscopicity, linear olefins are more preferable, and ethylene and propylene are particularly preferable.

The ratio (wA:wB) of the weight fraction wA of the polymer block [A] in the block copolymer [1] to the weight fraction wB of the polymer block [B] in the block copolymer [1] is 30:70 to 60:40, preferably 35:65 to 55:45, and more preferably 40:60 to 50:50. If the weight fraction wA is too high, a decrease in flexibility may occur, and the laminated glass may exhibit low heat resistance, although the heat resistance of the hydrogenated block copolymer [3] increases. If the weight fraction wA is too low, the hydrogenated block copolymer [3] may exhibit poor heat resistance.

The number of polymer blocks [A] included in the block copolymer [1] is normally 5 or less, preferably 4 or less, and more preferably 3 or less. When the block copolymer [1] includes a plurality of polymer blocks [A] and/or a plurality of polymer blocks [B], the ratio (Mw(A1)/Mw(A2)) of the weight average molecular weight Mw(A1) of the polymer block among the plurality of polymer blocks [A] that has the highest weight average molecular weight to the weight average molecular weight Mw(A2) of the polymer block among the plurality of polymer blocks [A] that the lowest weight average molecular weight, and the ratio (Mw(B1)/Mw(B2)) of the weight average molecular weight Mw(B1) of the polymer block among the plurality of polymer blocks [B] that has the highest weight average molecular weight to the weight average molecular weight Mw(B2) of the polymer block among the plurality of polymer blocks [B] that has the lowest weight average molecular weight, are 2.0 or less, preferably 1.5 or less, and more preferably 1.2 or less.

The polystyrene-reduced weight average molecular weight (Mw) of the block copolymer [1] measured by GPC using tetrahydrofuran (THF) as an eluant is normally 30,000 to 200,000, preferably 40,000 to 150,000, and more preferably 50,000 to 100,000. The molecular weight distribution (Mw/Mn) of the block copolymer [1] is preferably 3 or less, more preferably 2 or less, and particularly preferably 1.5 or less.

The block copolymer [1] may be produced using an arbitrary method. The block copolymer [1] may be produced using a known block copolymer production method. For example, when producing a block copolymer that includes three polymer blocks, the block copolymer [1] may be produced by (i) a method that includes a first step that polymerizes a monomer mixture (a1) that includes an aromatic vinyl compound that produces the polymer block [A], a second step that polymerizes a monomer mixture (bl) that includes a linear conjugated diene compound that produces the polymer block [B], and a third step that polymerizes a monomer mixture (a2) that includes an aromatic vinyl compound that produces the polymer block [A] (the monomer mixture (a1) and the monomer mixture (a2) may be either identical or different), (ii) a method that includes a first step that polymerizes a monomer mixture (a1) that includes an aromatic vinyl compound that produces the polymer block [A], a second step that polymerizes a monomer mixture (bl) that includes a linear conjugated diene compound that produces the polymer block [B], and a third step that couples the ends of the resulting polymer block [B] using a coupling agent, or the like.

The monomer mixture may be polymerized by radical polymerization, anionic polymerization, cationic polymerization, coordination anionic polymerization, coordination cationic polymerization, or the like. The polymerization operation and the subsequent hydrogenation reaction are facilitated, and the transparency of the resulting block copolymer is improved by implementing radical polymerization, anionic polymerization, cationic polymerization, or the like via living polymerization (particularly by implementing anionic polymerization via living polymerization (living anionic polymerization)).

The monomer mixture is normally polymerized at 0 to 100°C, preferably 10 to 80°C, and particularly preferably 20 to 70°C, in the presence of an initiator. Examples of the initiator that may be used for living anionic polymerization include monoorganolithium compounds such as n-butyllithium, sec-butyllithium, t-butyllithium, hexyllithium, and phenyllithium; polyfunctional organolithium compounds such as dilithiomethane, 1,4-dilithiobutane, and 1,4-dilithio-2-ethylcyclohexane; and the like.

The monomer mixture may be polymerized by solution polymerization, slurry polymerization, or the like. Note that it is possible to easily remove heat of reaction when using solution polymerization.

An inert solvent that dissolves the polymer obtained in each step is used for polymerization. Examples of the inert solvent include aliphatic hydrocarbons such as n-butane, n-pentane, isopentane, n-hexane, n-heptane, and isooctane; alicyclic hydrocarbons such as cyclopentane, cyclohexane, methylcyclopentane, methylcyclohexane, decalin, bicyclo[4.3.0]nonane, and tricyclo[4.3.0.1^{2,5}]decane; aromatic hydrocarbons such as benzene and toluene; and the like. It is preferable to use an alicyclic hydrocarbon since it can be used directly as an inert solvent for the subsequent hydrogenation reaction, and can easily dissolve the block copolymer.

These solvents may be used either alone or in combination.

The solvent is normally used in an amount of 200 to 2000 parts by weight based on 100 parts by weight of the monomers in total.

When the monomer mixture includes two or more components, a randomizer or the like may be used in order to prevent a situation in which only one component forms a long chain.
In particular, it is preferable to use a Lewis base compound or the like as the randomizer when implementing the polymerization reaction by anionic polymerization.

Examples of the Lewis base compound include ether compounds such as dimethyl ether, diethyl ether, diisopropyl ether, dibutyl ether, tetrahydrofuran, diphenyl ether, ethylene glycol diethyl ether, and ethylene glycol methyl phenyl ether; tertiary amine compounds such as tetramethylethylenediamine, trimethylamine, triethylamine, and pyridine; alkali metal alkoxide compounds such as potassium t-amyloxide and potassium t-butoxide; phosphine compounds such as triphenylphosphine; and the like. These Lewis base compounds may be used either alone or in combination.

### (2) Hydrogenated block copolymer [2]

The hydrogenated block copolymer [2] is a polymer obtained by hydrogenating the carbon-carbon unsaturated bonds included in the main chain, the side chain, and the aromatic ring of the block copolymer [1]. The hydrogenation rate of the hydrogenated block copolymer [2] is normally 90% or more, preferably 97% or more, and more preferably 99% or more. It is possible to achieve better transparency, weatherability, and heat resistance by increasing the hydrogenation rate.

In particular, it is possible to improve light resistance and oxidation resistance by increasing the hydrogenation rate of the carbon-carbon unsaturated bonds included in the main chain and the side chain. The hydrogenation rate of the carbon-carbon unsaturated bonds included in the main chain and the side chain is preferably 95% or more, and more preferably 99% or more.

The hydrogenation rate of the carbon-carbon unsaturated bonds included in the aromatic ring is preferably 90% or more, more preferably 93% or more, and particularly preferably 95% or more. The glass transition temperature of the polymer block [A] increases as a result of increasing the hydrogenation rate of the carbon-carbon unsaturated bonds included in the aromatic ring, and the resulting adhesive exhibits sufficient heat resistance when used to produce laminated glass even if the adhesive is not crosslinked.

The hydrogenation rate of the hydrogenated block copolymer [2] may be calculated from the ¹H-NMR spectrum.

The unsaturated bond hydrogenation method, the hydrogenation reaction, and the like are not particularly limited. The unsaturated bonds may be hydrogenated using a known method. It is preferable to use a hydrogenation method that can achieve a high hydrogenation rate, and suppress occurrence of a polymer chain cleavage reaction. For example, a hydrogenation method that utilizes a catalyst that includes at least one metal selected from nickel, cobalt, iron, titanium, rhodium, palladium, platinum, ruthenium, rhenium, and the like is preferable. A heterogeneous catalyst or a homogeneous catalyst may be used as the hydrogenation catalyst. It is preferable to effect the hydrogenation reaction in an organic solvent.

The heterogeneous catalyst may be used directly in the form of a metal or a metal compound, or may be used in a state in which the heterogeneous catalyst is supported on an appropriate carrier. Examples of the carrier include activated carbon, silica, alumina, calcium carbonate, titania, magnesia, zirconia, diatomaceous earth, silicon carbide, calcium fluoride, and the like. The catalyst is normally supported on the carrier in ratio of 0.1 to 60 wt%, and preferably 1 to 50 wt%, based on the total amount of the catalyst and the carrier. It is preferable to use a supported catalyst having a specific surface area of 100 to 500 m²/g and an average pore size of 100 to 1000 Å (more preferably 200 to 500 Å), for example. Note that the specific surface area refers to a value obtained by measuring the nitrogen adsorption amount, and calculating the specific surface area using the BET equation, and the average pore size refers to a value measured by mercury porosimetry.

A catalyst prepared by combining a nickel, cobalt, titanium, or iron compound with an organometallic compound (e.g., organoaluminum compound or organolithium compound), an organometallic complex catalyst (e.g., organorhodium complex catalyst, organopalladium complex catalyst, organoplatinum complex catalyst, organoruthenium complex catalyst, or organorhenium complex catalyst), or the like may be used as the homogeneous catalyst.

An acetylacetonato compound, a carboxylate, a cyclopentadienyl compound, or the like of nickel, cobalt, titanium, or iron may be used as the nickel, cobalt, titanium, or iron compound. Examples of the organoaluminum compound include alkylaluminums such as triethylaluminum and triisobutylaluminum; aluminum halides such as diethylaluminum chloride and ethylaluminum dichloride; alkylaluminum hydrides such as diisobutylaluminum hydride; and the like.

Examples of the organometallic complex catalyst include transition metal complexes such as dihydridotetrakis(triphenylphosphine)ruthenium, dihydridotetrakis(triphenylphosphine)iron, bis(cyclooctadiene)nickel, and bis(cyclopentadienyl)nickel.

These hydrogenation catalysts may be used either alone or in combination.

The hydrogenation catalyst is normally used in an amount of 0.01 to 100 parts by weight, preferably 0.05 to 50 parts by weight, and more preferably 0.1 to 30 parts by weight, based on 100 parts by weight of the polymer.

The hydrogenation temperature is normally 10 to 250°C, preferably 50 to 200°C, and more preferably 80 to 180°C. When the hydrogenation temperature is within the above range, a high hydrogenation rate is achieved, and molecular cleavage is suppressed. The hydrogen pressure is normally 0.1 to 30 MPa, preferably 1 to 20 MPa, and more preferably 2 to 10 MPa. When the hydrogen pressure is within the above range, a high hydrogenation rate is achieved, molecular cleavage is suppressed, and excellent operability (handling capability) is achieved.

The hydrogenation catalyst and/or the polymerization catalyst are/is removed from the reaction solution including the hydrogenated block copolymer [2] by filtration, centrifugation, or the like, and the hydrogenated block copolymer [2] is collected from the reaction solution. The hydrogenated block copolymer [2] may be collected from the reaction solution using a known method such as a steam coagulation method that removes the solvent from the solution of the hydrogenated block copolymer [2] by steam stripping, a direct solvent removal method that removes the solvent by heating under reduced pressure, or a coagulation method that pours the solution into a poor solvent for the hydrogenated block copolymer [2] to effect precipitation and coagulation, for example.

The hydrogenated block copolymer [2] thus collected may have an arbitrary shape (form). The hydrogenated block copolymer [2] is normally pelletized so that the hydrogenated block copolymer [2] can be easily subjected to the subsequent silylation reaction. When using the direct solvent removal method, the hydrogenated block copolymer [2] in a molten state may be extruded from a die in the shape of a strand, cooled, cut into pellets using a pelletizer, and then molded (formed), for example. When using the coagulation method, the resulting coagulate may be dried, extruded in a molten state using an extruder, cut into pellets using a pelletizer, and then subjected to the silylation reaction, for example.

The polystyrene-reduced weight average molecular weight (Mw) of the hydrogenated block copolymer [2] measured by gel permeation chromatography (GPC) using THF as an eluant is normally 30,000 to 200,000, preferably 40,000 to 150,000, and more preferably 50,000 to 100,000. When the Mw of the hydrogenated block copolymer [2] is within the above range, it is possible to improve mechanical strength and heat resistance. The molecular weight distribution (Mw/Mn) of the hydrogenated block copolymer [2] is preferably 3 or less, more preferably 2 or less, and particularly preferably 1.5 or less. When the Mw and the molecular weight distribution (Mw/Mn) of the hydrogenated block copolymer [2] are within the above ranges, the mechanical strength and the heat resistance of the resulting adhesive for laminated glass are improved.

### (3) Hydrogenated block copolymer [3]

The hydrogenated block copolymer [3] used in connection with one embodiment of the invention is obtained by introducing an alkoxysilyl group into the hydrogenated block copolymer [2]. The alkoxysilyl group may be bonded directly to the hydrogenated block copolymer [2], or may be bonded to the hydrogenated block copolymer [2] through a divalent organic group (e.g., alkylene group).

The alkoxysilyl group may be introduced into the hydrogenated block copolymer [2] using an arbitrary method. For example, the alkoxysilyl group may be introduced into the hydrogenated block copolymer [2] by reacting the hydrogenated block copolymer [2] and an ethylenically unsaturated silane compound in the presence of a peroxide.

The ethylenically unsaturated silane compound is not particularly limited as long as the ethylenically unsaturated silane compound undergoes graft polymerization with the hydrogenated block copolymer [2] to introduce the alkoxysilyl group into the hydrogenated block copolymer [2]. For example, the ethylenically unsaturated silane compound may be at least one ethylenically unsaturated silane compound selected from vinyltrimethoxysilane, vinyltriethoxysilane, allyltrimethoxysilane, allyltriethoxysilane, dimethoxymethylvinylsilane, diethoxymethylvinylsilane, p-styryltrimethoxysilane, p-styryltriethoxysilane, 3-methacryloxypropyltrimethoxysilane, 3 -methacryloxypropylmethyldimethoxysilane, 3-methacryloxypropyltriethoxysilane, 3-methacryloxypropylmethyldiethoxysilane, 3-acryloxyprophyltrimethoxysilane, 3-acryloxyprophyltriethoxysilane, and 2-norbornen-5-yltrimethoxysilane. Among these, vinyltrimethoxysilane, vinyltriethoxysilane, allyltrimethoxysilane, allyltriethoxysilane, dimethoxymethylvinylsilane, diethoxymethylvinylsilane, and p-styryltrimethoxysilane are preferable.

These ethylenically unsaturated silane compounds may be used either alone or in combination.

The ethylenically unsaturated silane compound is normally used in an amount of 0.1 to 10 parts by weight, preferably 0.2 to 5 parts by weight, and more preferably 0.3 to 3 parts by weight, based on 100 parts by weight of the hydrogenated block copolymer [2].

The peroxide may be at least one organic peroxide selected from dibenzoyl peroxide, t-butyl peroxyacetate, 2,2-di-(t-butylperoxy)butane, t-butyl peroxybenzoate, t-butylcumyl peroxide, dicumyl peroxide, di-t-hexyl peroxide, 2,5-dimethyl-2,5-di(t-butylperoxy)hexane, dit-butyl peroxide, t-butyl hydroperoxide, t-buthyl peroxyisobutyrate, lauroyl peroxide, dipropionyl peroxide, and p-menthane hydroperoxide, for example. It is preferable to use a peroxide having a one-minute half-life temperature of 170 to 190°C. For example, it is preferable to use t-butylcumyl peroxide, dicumyl peroxide, di-t-hexyl peroxide, 2,5-dimethyl-2,5-di(t-butylperoxy)hexane, di-t-butyl peroxide, and the like.

These peroxides may be used either alone or in combination.

The peroxide is normally used in an amount of 0.01 to 5 parts by weight, preferably 0.2 to 3 parts by weight, and more preferably 0.3 to 2 parts by weight, based on 100 parts by weight of the hydrogenated block copolymer [2].

A heating kneader or a reactor may be used to react the hydrogenated block copolymer [2] and the ethylenically unsaturated silane compound in the presence of the peroxide. For example, a mixture of the hydrogenated block copolymer [2], the ethylenically unsaturated silane compound, and the peroxide may be heated and melted at a temperature equal to or higher than the melting point of the hydrogenated block copolymer [2] using a twin-screw kneader, and kneaded for a desired time.

The kneading temperature is normally 180 to 240°C, preferably 190 to 230°C, and more preferably 200 to 220°C. The heating/kneading time is normally 0.1 to 15 minutes, preferably 0.2 to 10 minutes, and more preferably 0.3 to 5 minutes. When using continuous kneading equipment such as a twin-screw kneader or a single-screw extruder, the mixture may be continuously kneaded and extruded so that the residence time is within the above range.

When using the hydrogenated block copolymer [3] as the adhesive for laminated glass, the alkoxysilyl group is normally introduced into the hydrogenated block copolymer [2] in an amount of 0.1 to 10 parts by weight, preferably 0.2 to 5 parts by weight, and more preferably 0.3 to 3 parts by weight, based on 100 parts by weight of the hydrogenated block copolymer [2]. If the amount of alkoxysilyl groups introduced into the hydrogenated block copolymer [2] is too large, the alkoxysilyl groups that have been decomposed due to a small amount of water or the like may be crosslinked to a large extent, and adhesion to glass may decrease. The alkoxysilyl group introduction amount is calculated from the ¹H-NMR spectrum data. Note that the number of integrations is increased when the alkoxysilyl group introduction amount is small.

The molecular weight of the hydrogenated block copolymer [3] (i.e., the molecular weight of the polymer main component) does not significantly differ from that of the hydrogenated block copolymer [2] since the amount of alkoxysilyl groups introduced into the hydrogenated block copolymer [2] is small. Note that the molecular weight distribution increases due to a polymer crosslinking reaction and a polymer cleavage reaction since the modification reaction is effected in the presence of the peroxide. The polystyrene-reduced weight average molecular weight (Mw) of the hydrogenated block copolymer [3] measured by gel permeation chromatography (GPC) using THF as an eluant is normally 30,000 to 200,000, preferably 40,000 to 150,000, and more preferably 50,000 to 120,000, and the molecular weight distribution (Mw/Mn) of the hydrogenated block copolymer [3] is normally 3.5 or less, preferably 2.5 or less, and particularly preferably 2.0 or less. When the Mw and the molecular weight distribution (Mw/Mn) of the hydrogenated block copolymer [3] are within the above ranges, the resulting adhesive for laminated glass maintains excellent mechanical strength and tensile elongation.

The hydrogenated block copolymer [3] thus obtained exhibits improved adhesion to glass and a metal. Therefore, when the hydrogenated block copolymer [3] is used as an adhesive for laminated glass, the adhesive exhibits improved adhesion to a reinforcing wire gauze, a metal wire, or the like that is provided between the glass sheets and the adhesive layers. This ensures that the adhesive maintains sufficient adhesion even when subjected to a high-temperature/high-humidity environment at 85°C and 85%RH for 2000 hours (i.e., normal laminated glass reliability evaluation conditions).

### (4) Additive

When producing laminated glass by integrally bonding a plurality of glass sheets through the adhesive component, an additive may be incorporated in the adhesive that includes the hydrogenated block copolymer [3] in order to improve the performance of the adhesive.

Examples of the additive include a polymer other than the hydrogenated block copolymer [3] that improves the resin properties; a light stabilizer, a UV absorber, and an antioxidant that improve weatherability, heat resistance, and the like; a lubricant that improves handling/workability during molding by preventing pellet blocking; and the like. These additives may be used either alone or in combination.

### Polymer other than hydrogenated block copolymer [3]

A polymer other than the hydrogenated block copolymer [3] is added to the adhesive in order to improve the resin properties of the adhesive. Examples of a polymer other than the hydrogenated block copolymer [3] include hydrogenated block copolymers that are a precursor of the hydrogenated block copolymer [3]; olefin-based polymers such as polyethylene, polypropylene, an ethylene-propylene copolymer and a propylene-ethylene-1-butene copolymer; isobutylene-based polymers such as polyisobutylene and a hydrogenated isobutylene-isoprene copolymer; petroleum resins such as a 1,3-pentadiene-based petroleum resin, a cyclopentadiene-based petroleum resin, and a styrene-indene-based petroleum resin, and hydrogenated products thereof; and the like.

These polymers are appropriately used in an amount of 40 parts by weight or less based on 100 parts by weight of the hydrogenated block copolymer [3] taking account of an improvement in resin properties.

### Light stabilizer

The light stabilizer is added to the adhesive in order to improve the light resistance of the adhesive. A hindered amine-based light stabilizer is preferable as the light stabilizer. Examples of the hindered amine-based light stabilizer include compounds that include a 3,5-dit-butyl-4-hydroxyphenyl group in the structure, compounds that include a 2,2,6,6-tetramethylpiperidyl group in the structure, compounds that include a 1,2,2,6,6-pentamethyl-4-piperidyl group in the structure, and the like.

Among these, a reaction product of a formaldehyde polycondensate, a polymer of 2,4,6-trichloro-1,3,5-triazine, N,N'-bis(2,2,6,6-tetramethylpiperidin-4-yl)hexane-1,6-diyldiamine, and morpholine, and formic acid, an N,N'-bis(2,2,6,6-tetramethyl-4-N-methylpiperidyl)-N,N'-diformyl-alkylenediamine, an N,N'-bis(2,2,6,6-tetramethyl-4-piperidyl)-N,N'-diformylalkylenediamine, an N,N'-bis(2,2,6,6-tetramethyl-4-piperidyl)-N,N'-bisalkylene fatty acid amide, poly[{6-(1,1,3,3-tetramethylbutyl)amino-1,3,5-triazine-2,4-diyl} {(2,2,6,6-tetramethyl-4-piperidyl)imino}hexamethylene{(2,2,6,6-tetramethyl-4-piperidyl)imino}], and a reaction product of a polymer of N,N'-bis(2,2,6,6-tetramethyl-4-piperidinyl)-1,6-hexanediamine and 2,4,6-trichloro-1,3,5-triazine, N-butyl-1-butaneamine, and N-butyl-2,2,6,6-tetramethyl-4-piperidinamine are preferable, and an N,N'-bis(2,2,6,6-tetramethyl-4-piperidyl)-N,N'-diformylalkylenediamine, and a reaction product of a polymer of N,N'-bis(2,2,6,6-tetramethyl-4-piperidinyl)-1,6-hexanediamine and 2,4,6-trichloro-1,3,5-triazine, N-butyl-1-butaneamine, and N-butyl-2,2,6,6-tetramethyl-4-piperidinamine are particularly preferable, since excellent weatherability can be obtained.

The hindered amine-based light stabilizer is normally used in an amount of 0.01 to 5 parts by weight, preferably 0.02 to 2.5 parts by weight, and more preferably 0.04 to 1.0 parts by weight, based on 100 parts by weight of the hydrogenated block copolymer [3]. If the amount of the hindered amine-based light stabilizer is less than 0.01 parts by weight, the adhesive layer included in laminated glass may exhibit insufficient weatherability. If the amount of the hindered amine-based light stabilizer is more than 5 parts by weight, the T-die or the cooling roll of an extruder may be contaminated to a large extent (i.e., workability may deteriorate) during a melt molding process that molds (forms) the hydrogenated block copolymer [3] in the shape of a sheet.

### UV absorber

The UV absorber is added to the adhesive in order to further improve the light resistance of the adhesive. Examples of the UV absorber include a benzophenone-based UV absorber, a salicylate-based UV absorber, a benzotriazole-based UV absorber, and the like.

Examples of the benzophenone-based UV absorber include 2,4-dihydroxybenzophenone, 2-hydroxy-4-methoxybenzophenone, 2-hydroxy-1-methoxybenzophenone-5-sulfonic acid trihydrate, 2-hydroxy-4-octyloxybenzophenone, 4-dodecyloxy-2-hydroxybenzophenone, 4-benzyloxy-2-hydroxybenzophenone, 2,2',4,4'-tetrahydroxybenzophenone, 2,2'-dihydroxy-4,4'-dimethoxybenzophenone, and the like. Examples of the salicylate-based UV absorber include phenyl salicylate, 4-t-butylphenyl 2-hydroxybenzoate, phenyl 2-hydroxybenzoate, 2,4-di-t-butylphenyl 3,5-di-t-butyl-4-hydroxybenzoate, hexadecyl 3,5-di-t-butyl-4-hydroxybenzoate, and the like. Examples of the benzotriazole-based UV absorber include 2-(2-hydroxy-5-methylphenyl)-2H-benzotriazole, 2-(3-t-butyl-2-hydroxy-5-methylphenyl)-5-chloro-2H-benzotriazole, 2-(3,5-di-t-butyl-2-hydroxyphenyl)-5-chloro-2H-benzotriazole, 2-(3,5-di-t-butyl-2-hydroxyphenyl)-2H-benzotriazole, 2-(3,5-dicumyl-2-hydroxyphenyl)-2H-benzotriazole, 5-chloro-2-(3,5-di-t-butyl-2-hydroxyphenyl)-2H-benzotriazole, 2-(3,5-di-t-amyl-2-hydroxyphenyl)-2H-benzotriazole, 2-(2-hydroxy-5-t-octylphenyl)-2H-benzotriazole, 2-(2-hydroxy-4-octylphenyl)-2H-benzotriazole, 2-(2H-benzotriazole-2-yl)-4-methyl-6-(3,4,5,6-tetrahydrophthalimidylmethyl)phenol, 2,2'-methylenebis[4-(1,1,3,3-tetramethylbutyl)-6-[(2H-benzotriazole-2-yl)phenol]], and the like.

The UV absorber is normally used in an amount of 0.01 to 2 parts by weight, preferably 0.02 to 1 part by weight, and more preferably 0.04 to 0.5 parts by weight, based on 100 parts by weight of the hydrogenated block copolymer [3].

### Antioxidant

The antioxidant is added to the adhesive in order to improve the thermal stability of the adhesive. Examples of the antioxidant include a phosphorus-based antioxidant, a phenol-based antioxidant, a sulfur-based antioxidant, and the like. It is preferable to use a phosphorus-based antioxidant since coloration occurs to only a small extent.

Specific examples of the phosphorus-based antioxidant include monophosphite-based compounds such as triphenyl phosphite, diphenyl isodecyl phosphite, phenyl diisodecyl phosphite, tris(nonylphenyl) phosphite, tris(dinonylphenyl) phosphite, tris(2,4-di-t-butylphenyl) phosphite, and 10-(3,5-di-t-butyl-4-hydroxybenzyl)-9,10-dihydro-9-oxa-10-phosphaphenanthrene-10-oxide; diphosphite-based compounds such as 4,4'-butylidenebis(3-methyl-6-t-butylphenyl ditridecyl phosphite) and 4,4'-isopropylidenebis(phenyl dialkyl(C₁₂₋₁₅) phosphite); compounds such as 6-[3-(3-t-butyl-4-hydroxy-5-methylphenyl)propoxy]-2,4,8,10-tetrakis-t-butyldibenzo[d,f][1.3.2]dioxaphosphepin and 6-[3-(3,5-di-t-butyl-4-hydroxyphenyl)propoxy]-2,4,8,10-tetrakis-t-butyldibenzo[d,f][1.3.2]dioxaphosphepin; and the like.

Examples of the phenol-based antioxidant include pentaerythrityl-tetrakis[3-(3,5-di-t-butyl-4-hydroxyphenyl) propionate], 2,2-thiodiethylenebis[3-(3,5-di-t-butyl-4-hydroxyphenyl) propionate], octadecyl-3-(3,5-di-t-butyl-4-hydroxyphenyl) propionate, 3,9-bis{2-[3-(3-t-butyl-4-hydroxy-5-methylphenyl)[propionyloxy]]-1,1-dimethylethyl}-2,4,8,10-tetraoxaspiro[5,5]undecane, 1,3,5-trimethyl-2,4,6-tris(3,5-di-t-butyl-4-hydroxybenzyl)benzene, and the like.

Examples of the sulfur-based antioxidant include dilauryl 3,3'-thiodipropionate, dimyristyl 3,3'-thiodipropionate, distearyl 3,3'-thiodipropionate, laurylstearyl 3,3'-thiodipropionate, pentaerythritoltetrakis(β-lauryl thiopropionate), 3,9-bis(2-dodecylthioethyl)-2,4,8,10-tetraoxaspiro[5,5]undecane, and the like.

The antioxidant is normally used in an amount of 0.01 to 2 parts by weight, preferably 0.05 to 1 part by weight, and more preferably 0.1 to 0.5 parts by weight, based on 100 parts by weight of the hydrogenated block copolymer [3]. The light resistance of the adhesive can be further improved by utilizing the antioxidant in combination with the hindered amine-based light stabilizer. Note that a further improvement in light resistance may not be obtained even if the antioxidant is added in an amount of more than 2 parts by weight.

These additives are normally used in an amount of 40 parts by weight or less based on 100 parts by weight of the hydrogenated block copolymer [3].

When integrally bonding glass sheets through the adhesive, the additive may be uniformly dispersed by (i) a method that adds a solution prepared by dissolving the additive in an appropriate solvent to a solution of the hydrogenated block copolymer [2] (i.e., a precursor of the hydrogenated block copolymer [3]), uniformly mixes the mixture, removes the solvent, collects the hydrogenated block copolymer including the additive, and reacts the hydrogenated block copolymer with the ethylenically unsaturated silane compound in the presence of the peroxide, (ii) a method that melts the hydrogenated block copolymer [3] using a twin-screw kneader, a roll, a Brabender, an extruder, or the like, and kneads the hydrogenated block copolymer [3] and the additive, (iii) a method that kneads the additive together with the hydrogenated block copolymer [2] and the ethylenically unsaturated silane compound when reacting the hydrogenated block copolymer [2] and the ethylenically unsaturated silane compound in the presence of the peroxide, (iv) a method that mixes pellets in which the additive is uniformly dispersed in the hydrogenated block copolymer [2] with pellets of the hydrogenated block copolymer [3], and melts and kneads the mixture to uniformly disperse the additive, or the like.

Since the hydrogenated block copolymer [3] used in connection with one embodiment of the invention exhibits low hygroscopicity, non-hydrolyzability, excellent transparency, and excellent flexibility, and maintains high adhesion to glass even when subjected to a high-temperature/high-humidity environment for a long time. The hydrogenated block copolymer [3] may suitably be used to bond layers of glass.

### (5) Adhesive

When bonding glass sheets using the adhesive, the adhesive is normally dissolved in a solvent to prepare a solution to be applied to the surface of the glass sheet, or molded (formed) in the shape of a sheet, for example.

The solution of the adhesive may be prepared using an arbitrary method. The solution of the adhesive is normally prepared by adding the hydrogenated block copolymer [3] and an optional additive to the solvent, and uniformly dissolving the hydrogenated block copolymer [3] and the optional additive.

A soluble solvent such as a hydrocarbon-based solvent (e.g., cyclohexane or methylcyclohexane), an aromatic hydrocarbon-based solvent (e.g., toluene or xylene), or an ether-based solvent (e.g., THF) is used as the solvent.

The concentration of the solution is normally 5 to 40 wt%, and preferably 10 to 30 wt%.

The solution is preferably applied to a thickness of 0.01 to 0.1 mm. If the solution is applied to a thickness of less than 0.01 mm, the glass sheets may not be uniformly bonded. If the solution is applied to a thickness of more than 0.1 mm, the solvent may remain in the applied adhesive, and air bubbles may occur after bonding the glass sheets, for example.

The adhesive may be molded in the shape of a sheet using an arbitrary method. The adhesive may be molded in the shape of a sheet using a known melt extrusion molding method (e.g., cast molding method, extrusion sheet molding method, or inflation molding method), compression molding method, calendering molding method, or the like.

Since the adhesive includes the hydrogenated block copolymer [3], and does not require addition of an organic peroxide that provides thermal crosslinkability, the melt molding temperature can be selected over a wide range.

For example, when using a melt extrusion molding method, the resin temperature is normally selected within the range of 170 to 230°C, preferably 180 to 220°C, and more preferably 190 to 210°C. If the resin temperature is too low, the fluidity of the resin may deteriorate, and the molded sheet may have defects (e.g., orange peel or die line). Moreover, it may be difficult to increase the sheet extrusion speed (i.e., it is industrially disadvantageous). If the resin temperature is too high, the adhesive may exhibit poor adhesion to glass, or the sheet may exhibit low storage stability, and show a decrease in adhesion to glass when stored in a normal temperature/normal humidity environment for a long time.

The thickness of the sheet formed of the adhesive is not particularly limited, but is preferably 0.1 to 10 mm. If the thickness of the sheet is less than 0.1 mm, the glass sheets may not be uniformly bonded. If the thickness of the sheet is more than 10 mm, the light transmittance of the sheet may decrease, or it may be necessary to use a large amount of the hydrogenated block copolymer [3] (i.e., it may be uneconomical).

The sheet formed of the adhesive may be a single-layer sheet formed of the adhesive that includes the hydrogenated block copolymer [3] and an optional additive, or may be a multilayer sheet in which a layer formed of the adhesive is stacked on one side or each side of a sheet formed of a composition that includes the hydrogenated block copolymer [2] and an optional additive.

The multilayer sheet may be formed using a two-material/three-layer coextrusion molding method, a method that stacks a sheet formed of an adhesive component that includes the hydrogenated block copolymer [3] on one side or each side of a sheet formed of an adhesive component that includes the hydrogenated block copolymer [3] by thermocompression bonding or using an adhesive, a method that applies a solution prepared by dissolving the adhesive in a solvent to one side or each side of a sheet formed of the hydrogenated block copolymer [2], and volatilizes the solvent, or the like.

When using the multilayer sheet, the thickness of the layer formed of the adhesive is normally 0.001 mm or more, preferably 0.005 mm or more, and more preferably 0.01 mm or more. If the thickness of the layer formed of the adhesive is less than 0.001 mm, sufficient adhesion to the glass sheet may not be obtained.

The single-layer sheet or the multilayer sheet may have a flat shape, an embossed shape, or the like. The sheet may be stored in a state in which a release film is placed on one side of the sheet in order to prevent a situation in which the sheet undergoes blocking. When the sheet has an embossed shape, the sheet exhibits a good deaeration capability during a vacuum lamination process employed when bonding the glass sheets, and air bubbles rarely remain in the resulting laminated glass.

### (6) Laminated glass

The laminated glass according to one embodiment of the invention is obtained by integrally bonding the glass sheets through the adhesive that includes the hydrogenated block copolymer [3].

The thickness of the glass sheet is not particularly limited, but is normally about 0.5 to 10 mm. Note that it is possible to bond ultrathin glass sheets having a thickness of about 0.05 to 0.1 mm through the hydrogenated block copolymer [3] to obtain laminated glass.

Since the hydrogenated block copolymer [3] maintains flexibility over a wide temperature range from a low temperature (e.g., about -50°C) to a high temperature (e.g., about 120°C), it is possible to suppress a situation in which glass breaks due to a rapid change in temperature even when a plurality of layers of glass that differ in coefficient of thermal expansion are bonded.

The type of glass is not particularly limited. Examples of the glass include aluminosilicate glass, aluminoborosilicate glass, uranium glass, potash glass, silicate glass, crystallized glass, germanium glass, quartz glass, soda glass, lead glass, barium borosilicate glass, borosilicate glass, heat-reflecting glass that is coated with an ultrathin metal film, and the like.

The laminated glass may be produced by providing the hydrogenated block copolymer [3] between a plurality of glass sheets, and bonding the plurality of glass sheets with heating under reduced pressure using a vacuum laminator or a heat-resistant rubber bag that can be decompressed.

The value of the laminated glass may be improved by decorating the laminated glass, or providing the laminated glass with a function of blocking electromagnetic waves and radiation, or a function of blocking infrared rays and heat rays. For example, a plurality of sheets formed of the hydrogenated block copolymer [3] may be provided between two glass sheets in a state in which a resin film that is colored for decoration, or provided with a specific shape, a fabric, fibers, Japanese paper, colored paper, a color film, leather, a thin piece of wood, metal foil, a metal sheet, a wire gauze, a perforated metal, a coloring matter, a dye, a pigment, a multilayer thin film, or the like is provided between the plurality of sheets.

Examples of an infrared absorber used to blocks infrared rays include an azine-based infrared absorber, an azlenium-based infrared absorber, an azo-based infrared absorber, an aminium-based infrared absorber, an anthraquinone-based infrared absorber, an isoindolinone-based infrared absorber, an indoaniline metal complex-based infrared absorber, an indophenol-based infrared absorber, a carbonium-based infrared absorber, a quinacridon-based infrared absorber, a quinophthalone-based infrared absorber, a quinoneimine-based infrared absorber, a metal complex salt-based azo-based infrared absorber, a croconium-based infrared absorber, a cyanine-based infrared absorber, a diimonium-based infrared absorber, a dioxazine-based infrared absorber, a dithiol metal complex-based infrared absorber, a squarylium-based infrared absorber, a thiourea compound, a thiopyrylium-based infrared absorber, a naphthalocyanine-based infrared absorber, a naphthoquinone-based infrared absorber, a nigrosine-based infrared absorber, a bisazostilbene-based infrared absorber, a pyrazoloneazo-based infrared absorber, a pyrylium-based infrared absorber, a phthalocyanine-based infrared absorber, a perylenetetracarboxyimide-based infrared absorber, a benzothiopyran-based spiropyran infrared absorber, a polymethine-based infrared absorber, a methine-based infrared absorber, indium tin oxide particles, antimony tin oxide particles, an infrared absorber formed of particles of an oxide, a carbide, a boride, or the like of a metal that belongs to Group 4A, 5A, or 6A in the periodic table, cesium-containing tungsten oxide particles, nanometer-sized metal particles, and the like. These infrared absorbers may be provided between the plurality of sheets formed of the hydrogenated block copolymer [3], or may be incorporated in the sheet.

The laminated glass according to one embodiment of the invention is useful as decorative glass, design glass, building window glass, roof glass, automotive windshield/sunroof glass, electromagnetic wave-blocking partition glass, and the like.

A solar cell that exhibits excellent durability can be obtained by forming a dye-based photovoltaic element, a thin-film photovoltaic element, or the like on one side of a glass sheet, and bonding another glass sheet to the side of the above glass sheet on which the photovoltaic element is formed, through the hydrogenated block copolymer [3].

The hydrogenated block copolymer [3] may also be applied to (as) a sealing material used to seal a liquid crystal cell, an organic EL device/organic light-emitting diode, an LED device, and the like; a gasket/sealing material for a manganese battery, a nickel metal hydride battery, a nickel-cadmium battery, an alkaline battery, a lithium-ion battery, a zinc-air battery, and the like; a bonding material for bonding a glass sheet and a metal sheet, bonding a glass sheet and a resin sheet, or bonding a metal sheet and a metal sheet; a protective coating material for a glass epoxy printed circuit board; a binder such as a binder for a flexible printed circuit board and a binder for conductive paste; a surface protective film or sheet material for an adherend such as a glass sheet, a metal sheet, and a plastic sheet; and the like by utilizing excellent adhesion to glass, a metal, a plastic, and the like.

A multilayer sheet obtained by stacking the hydrogenated block copolymer [3], the hydrogenated block copolymer [2] (i.e., a precursor of the hydrogenated block copolymer [3]), or a composition of the hydrogenated block copolymer [2] prepared by adding a tackifier to the hydrogenated block copolymer [2] on another resin sheet, may also be used as a surface protective sheet. A multilayer sheet obtained by stacking the hydrogenated block copolymer [2] or the composition of the hydrogenated block copolymer [2] on another resin sheet can be easily removed from the adherend.

### 2) Method that uses hydrogenated block copolymer [3] as adhesive for laminated glass

A method according to one embodiment of the invention includes using a hydrogenated block copolymer [3] as an adhesive for laminated glass, the hydrogenated block copolymer [3] being obtained by introducing an alkoxysilyl group into a hydrogenated block copolymer [2] that is obtained by hydrogenating 90% or more of unsaturated bonds of a block copolymer [1] that includes at least two polymer blocks [A] and at least one polymer block [B], the polymer block [A] including a repeating unit derived from an aromatic vinyl compound as the main component, the polymer block [B] including a repeating unit derived from a linear conjugated diene compound as the main component, and the ratio (wA:wB) of the weight fraction wA of the polymer block [A] in the block copolymer [1] to the weight fraction wB of the polymer block [B] in the block copolymer [1] being 30:70 to 60:40.

In the method according to one embodiment of the invention, the hydrogenated block copolymer [3] described above (see 1)) can be used as the adhesive for laminated glass.

Since the hydrogenated block copolymer [3] used in connection with the embodiments of the invention exhibits excellent heat resistance, excellent low-temperature flexibility, low hygroscopicity, excellent transparency, low birefringence, excellent weatherability, and excellent adhesion to glass, a metal, and the like, and can maintain excellent adhesion to glass, a metal, and the like even when subjected to a high-temperature/high-humidity environment for a long time, laminated glass obtained using the hydrogenated block copolymer [3] as an adhesive exhibits excellent durability.

Since it is unnecessary to perform a special process (e.g., water content adjustment) before bonding the adhesive used in connection with the embodiments of the invention to glass, and the adhesive allows easy storage and handling, it is possible to directly use the adhesive that has been stored in a normal temperature/normal humidity environment for a long time.

### EXAMPLES

The invention is further described below by way of examples and comparative examples. Note that the invention is not limited to the following examples. In the examples and comparative examples, the unit "parts" refers to "parts by weight", and the unit "%" refers to "wt%", unless otherwise indicated.

The property measurement methods and the test methods employed in the examples and comparative examples are described below.

### (1) Weight average molecular weight (Mw) and molecular weight distribution (Mw/Mn)

The molecular weight (standard polystyrene-reduced value) of the block copolymer and the hydrogenated block copolymer was measured at 38°C by GPC using THF as an eluant. An HLC-8020 GPC system (manufactured by Tosoh Corporation) was used as the measurement device.

### (2) Hydrogenation rate

The hydrogenation rate of the main chain, the side chain, and the aromatic ring of the hydrogenated block copolymer [2] was calculated from the ¹H-NMR spectrum.

### (3) Adhesion test (adhesion to glass sheet) (peel strength)

A sheet formed of the hydrogenated block copolymer [3] was placed on a white glass sheet (sheet glass) having a thickness of 2 mm, a width of 75 mm, and a length of 65 mm so that a non-adhesive part was provided at the end of the sheet. After performing vacuum deaeration at 170°C for 5 minutes using a vacuum laminator ("PVL0202S" manufactured by Nisshinbo Mechatronics Inc. (hereinafter the same)), the sheet and the glass sheet were pressure-bonded for 10 minutes under vacuum to prepare a laminated glass specimen (peel test specimen).

The surface of the sheet was cut at intervals of 10 mm, and subjected to a 180° peel test (peel rate: of 50 mm/min) from the non-adhesive part of the sheet in accordance with JIS K 6854-2 to measure the initial peel strength after the specimen had been subjected to the vacuum lamination process, and the peel strength after the specimen had been subjected to a high-temperature/high-humidity environment (85°C, 85%RH) for 1000 hours. The higher the peel strength, the better the adhesion to glass is.

### (4) Total light transmittance

A sheet formed of the hydrogenated block copolymer [3] was placed between two white glass sheets (sheet glass) having a thickness of 3.2 mm, a width of 50 mm, and a length of 50 mm. After performing vacuum deaeration at 170°C for 5 minutes using the vacuum laminator, the sheet and the glass sheets were pressure-bonded for 10 minutes under vacuum to prepare a laminated glass specimen, and the total light transmittance of the laminated glass specimen was measured referring to the method specified in JIS K 7375.

### (5) Light resistance test

Light was applied to a laminated glass specimen similar to the total light transmittance measurement specimen for 2000 hours using a sunshine weatherometer ("WEL-SUN- HC·B" manufactured by Suga Test Instruments Co., Ltd.) (sunshine carbon arc lamp, black panel temperature: 63°C, relative humidity: 50%). After removing the laminated glass specimen from the sunshine weatherometer, the total light transmittance of the laminated glass specimen was measured.

### (6) Heat resistance test 1

A laminated glass specimen similar to the total light transmittance measurement specimen was stored at 85°C for 2000 hours in an oven, and the total light transmittance of the laminated glass specimen was measured.

### (7) Heat resistance test 2

A sheet formed of the hydrogenated block copolymer [3] was placed between two white glass sheets (sheet glass) having a thickness of 3.2 mm, a width of 200 mm, and a length of 200 mm. After performing vacuum deaeration at 170°C for 5 minutes using the vacuum laminator, the sheet and the glass sheets were pressure-bonded for 10 minutes under vacuum to prepare a laminated glass specimen.

The laminated glass specimen was stored at 100°C or 120°C for 168 hours in an oven in a state in which only one of the glass sheets was held using a cradle so that the laminated glass specimen stood upright. The laminated glass specimen was then observed with the naked eye to evaluate the external appearance (e.g., displacement, discoloration, air bubbles, and delamination) of the laminated glass specimen.

### (8) Low-temperature resistance test

Two sheets formed of the hydrogenated block copolymer [3] were placed between two white glass sheets (sheet glass) having a thickness of 3.2 mm, a width of 200 mm, and a length of 200 mm. After performing vacuum deaeration at 150°C for 5 minutes using the vacuum laminator, the sheets and the glass sheets were pressure-bonded at 170°C for 10 minutes under vacuum to prepare a laminated glass specimen.

The laminated glass specimen was stored in a thermo-hygrostat at -40°C for 3 hours. A steel ball having a weight of 2 kg was dropped onto the surface of the laminated glass specimen (referring to the method specified in JIS R 3212) from a height of 2 m immediately after removing the laminated glass specimen from the thermo-hygrostat, and the state of breakage of the laminated glass specimen was observed with the naked eye.

### Example 1

### Step 1 (synthesis of block copolymer [1]-1)

A reactor equipped with a stirrer of which the internal atmosphere had been sufficiently replaced with nitrogen, was charged with 550 parts of dehydrated cyclohexane, 25.0 parts of dehydrated styrene, and 0.475 parts of n-dibutyl ether. After the addition of 0.68 parts of n-butyllithium (15% cyclohexane solution) with stirring, the mixture was stirred at 60°C for 60 minutes. The polymerization conversion rate measured by gas chromatography was 99.5%.

After the addition of 50.0 parts of dehydrated isoprene, the mixture was stirred for 30 minutes. The polymerization conversion rate was then measured, and found to be 99%.

After the addition of 25.0 parts of dehydrated styrene, the mixture was stirred for 60 minutes. The polymerization conversion rate was then measured, and found to be about 100%. The reaction was terminated by adding 0.5 parts of isopropyl alcohol. The resulting block copolymer [1]-1 had a weight average molecular weight (Mw) of 61,700 and a molecular weight distribution (Mw/Mn) of 1.05.

### Step 2 (synthesis of hydrogenated block copolymer [2]-1)

The polymer solution obtained as described above was transferred to a pressure-resistant reactor equipped with a stirrer. After the addition of 3.0 parts of a nickel catalyst supported on a diatomaceous earth carrier ("T-8400RL" manufactured by Süd-Chemie) (hydrogenation catalyst) and 100 parts of dehydrated cyclohexane, the mixture was mixed. After replacing the atmosphere inside the reactor with hydrogen gas, hydrogen was supplied to the reactor while stirring the solution to effect a hydrogenation reaction at 170°C for 6 hours under a pressure of 4.5 MPa. The resulting hydrogenated block copolymer [2]-1 had a weight average molecular weight (Mw) of 65,300 and a molecular weight distribution (Mw/Mn) of 1.06.

After removing the hydrogenation catalyst by filtering the reaction solution, 1.0 part of a solution prepared by dissolving 0.1 parts of pentaerythrityl-tetrakis[3-(3,5-di-t-butyl-4-hydroxyphenyl) propionate] ("Songnox 1010" manufactured by KOYO Chemical Research Center) (phenol-based antioxidant) in xylene was added to and dissolved in the reaction solution.

After filtering the solution through a metal fiber filter (manufactured by Nichidai Corporation, pore size: 0.4 µm) to remove minute solids, the solvent (cyclohexane and xylene) and other volatile components were removed from the solution at 260°C under a pressure of 0.001 MPa or less using a cylindrical evaporator ("Kontro" manufactured by Hitachi Ltd.). The residue was extruded in the shape of a strand in a molten state from a die connected to the evaporator, cooled, and cut using a pelletizer to obtain 90 parts of pellets of the hydrogenated block copolymer [2]-1. The resulting hydrogenated block copolymer [2]-1 had a weight average molecular weight (Mw) of 64,600 and a molecular weight distribution (Mw/Mn) of 1.11. The hydrogenation rate was about 1 00%.

### Step 3 (synthesis of hydrogenated block copolymer [3]-1)

2.0 parts of vinyltrimethoxysilane and 0.2 parts of 2,5-dimethyl-2,5-di(t-butylperoxy)hexane ("PERHEXA (registered trademark) 25B" manufactured by NOF Corporation) were added to 100 parts of the pellets of the hydrogenated block copolymer [2]-1. The mixture was kneaded at a resin temperature of 200°C for a residence time of 60 to 70 seconds using a twin-screw extruder ("TEM37B" manufactured by Toshiba Machine Co., Ltd.), extruded in the shape of a strand, air-cooled, and cut using a pelletizer to obtain 97 parts of pellets of a hydrogenated block copolymer [3]-1.

After dissolving 10 parts of the pellets of the hydrogenated block copolymer [3]-1 in 100 parts of cyclohexane, the solution was poured into 400 parts of dehydrated methanol to coagulate the hydrogenated block copolymer [3]-1. The hydrogenated block copolymer [3]-1 was filtered off, and dried at 25°C under vacuum to isolate 9.5 parts of the hydrogenated block copolymer [3]-1 in the form of crumbs.

The FT-IR spectrum of the hydrogenated block copolymer [3]-1 was measured. An absorption peak attributed to an Si-OCH₃ group was observed at 1090 cm⁻¹, and an absorption peak attributed to an Si-CH₂ group was observed at 825 cm⁻¹ and 739 cm⁻¹. These absorption peaks were observed at positions that differ from those (1075 cm⁻¹, 808 cm⁻¹, 766 cm⁻¹) of vinyltrimethoxysilane. An absorption band based on the proton of a methoxy group was observed at 3.6 ppm in the ¹H-NMR spectrum (in deuterated chloroform). It was confirmed from the peak area ratio that 1.7 parts of vinyltrimethoxysilane was bonded to 100 parts of the hydrogenated block copolymer [2]-1.

### Step 4 (molding of sheet [4]-1)

The pellets of the hydrogenated block copolymer [3]-1 were heated at 50°C for 4 hours using a hot air dryer (in which air was circulated) to remove dissolved air. 0.05 parts of a reaction product of a formaldehyde polycondensate, a polymer of 2,4,6-trichloro-1,3,5-triazine, N,N'-bis(2,2,6,6-tetramethylpiperidin-4-yl)hexane-1,6-diyldiamine, and morpholine, and formic acid ("Cyasorb (registered trademark) 3529" manufactured by Cytec Industries Japan LLC.) (light stabilizer), and 0.05 parts of 2-(2H-benzotriazol-2-yl)-4-(1,1,3,3-tetramethylbutyl)phenol ("Tinuvin (registered trademark) 329" manufactured by BASF Japan Ltd.) (UV absorber), were added to 100 parts of the pellets, and the mixture was homogenously stirred.

The mixture was extruded into a sheet [4]-1 having a thickness of 600 µm and a width of 500 mm using a T-die film molding device (width of T-die: 600 mm) having a resin melt-extrusion device provided with a screw having a diameter of 40 mm (molten resin temperature: 200°C, T-die temperature: 200°C, roll temperature: 50°C). One side of the sheet was embossed using a touch roll. The resulting sheet [4]-1 was wound around a roll.

### Step 5 (storage)

The sheet [4]-1 was cut to a size of 250×250 mm, and forty sheets [4]-1 were stacked to prepare two specimens. One of the two specimens was stored for 168 hours in an environment (1) (temperature: 25°C, humidity: 50%RH), and the other specimen was stored for 168 hours in an environment (2) (temperature: 25°C, humidity: 85%RH). The specimen stored in the environment (1) is hereinafter referred to as "sheet [4]-1(1)", and the specimen stored in the environment (2) is hereinafter referred to as "sheet [4]-1(2)".

### Step 6 (production of laminated glass)

Laminated glass specimens were produced in the same manner as described above using the sheet [4]-1(1) and the sheet [4]-1(2), respectively. The adhesion test (adhesion to glass sheet), light transmittance measurement, the light resistance test, the heat resistance test 1, the heat resistance test 2, and the low-temperature resistance test were performed using the resulting laminated glass specimens. The results are described below.

### Adhesion test (adhesion to glass sheet)

The laminated glass specimen produced using the sheet [4]-1(1) and the laminated glass specimen produced using the sheet [4]-1(2) had a peel strength of 20 N/cm or more (i.e., exhibited excellent adhesion) after the vacuum lamination process and after being subjected to the high-temperature/high-humidity environment (85°C, 85%RH) for 1000 hours. It was thus confirmed that it is unnecessary to adjust the water content and the like before bonding the sheet [4]-1 to glass, and the sheet [4]-1 allows easy handling.

### Total light transmittance

Each specimen had a total light transmittance of 91%, and a difference in total light transmittance due to the difference in sheet storage conditions was not observed. It was thus confirmed that the sheet [4]-1 allows easy handling.

### Light resistance test

Each specimen had a total light transmittance of 91% after applying light, and a change from the initial value was not observed. A difference in total light transmittance due to the difference in sheet storage conditions was not observed.

### Heat resistance test 1

Each specimen had a total light transmittance of 91% after storage, and a change from the initial value was not observed (i.e., each specimen exhibited excellent heat resistance). A difference in total light transmittance due to the difference in sheet storage conditions was not observed.

### Heat resistance test 2

Each specimen did not show displacement, discoloration, air bubbles, delamination, and the like (i.e., each specimen exhibited excellent heat resistance). A difference due to the difference in sheet storage conditions was not observed.

### Low-temperature resistance test

The glass of each specimen broke, but the fragments remained bonded to the sheet [4]-1, and penetration of the steel ball did not occur. A difference due to the difference in sheet storage conditions was not observed.

### Example 2

### Steps 1 and 2 (synthesis of hydrogenated block copolymer [2]-2)

92 parts of pellets of a hydrogenated block copolymer [2]-2 were obtained in the same manner as in Example 1 (steps 1 and 2), except that 17.5 parts of styrene, 0.50 parts of n-butyllithium (15% cyclohexane solution), 65.0 parts of isoprene, and 17.5 parts of styrene were sequentially added to the reaction system, and polymerized as the monomers (step 1). The resulting hydrogenated block copolymer [2]-2 had a weight average molecular weight (Mw) of 86,200 and a molecular weight distribution (Mw/Mn) of 1.15. The hydrogenation rate was about 100%.

### Step 3 (synthesis of hydrogenated block copolymer [3]-2)

98 parts of pellets of a hydrogenated block copolymer [3]-2 were obtained in the same manner as in Example 1 (step 3), except that the hydrogenated block copolymer [2]-2 was used instead of the hydrogenated block copolymer [2]-1. The pellets of the hydrogenated block copolymer [3]-2 thus obtained were analyzed in the same manner as in Example 1 (step 3). It was thus confirmed that 1.8 parts of vinyltrimethoxysilane was bonded to 100 parts of the hydrogenated block copolymer [2]-2.

### Step 4 (molding of sheet [4]-2)

A sheet [4]-2 was molded in the same manner as in Example 1 (step 4), except that the hydrogenated block copolymer [3]-2 was used instead of the hydrogenated block copolymer [3]-1. The resulting sheet [4]-2 was wound around a roll through a PET film (release film) having a thickness of 100 µm.

### Step 5 (storage)

The resulting sheet [4]-2 was cut to a size of 250×250 mm to prepare two specimens in which the PET film (release film) having a thickness of 100 µm was provided. The specimens were respectively stored in the environment (1) and the environment (2) in the same manner as in Example 1 (see "Step 5 (storage)"). The specimen stored in the environment (1) is hereinafter referred to as "sheet [4]-2(1)", and the specimen stored in the environment (2) is hereinafter referred to as "sheet [4]-2(2)".

### Step 6 (production of laminated glass)

Laminated glass specimens were produced in the same manner as described above using the sheet [4]-2(1) and the sheet [4]-2(2), respectively. The adhesion test (adhesion to glass sheet), light transmittance measurement, the light resistance test, the heat resistance test 1, the heat resistance test 2, and the low-temperature resistance test were performed using the resulting laminated glass specimens.

### Adhesion test (adhesion to glass sheet)

The laminated glass specimen produced using the sheet [4]-2(1) and the laminated glass specimen produced using the sheet [4]-2(2) had a peel strength of 20 N/cm or more (i.e., exhibited excellent adhesion) after the vacuum lamination process and after being subjected to the high-temperature/high-humidity environment (85°C, 85%RH) for 1000 hours. It was thus confirmed that it is unnecessary to adjust the water content and the like before bonding the sheet [4]-2 to glass, and the sheet [4]-2 allows easy handling.

### Light transmittance

Each specimen had a total light transmittance of 91%, and a difference in total light transmittance due to the difference in sheet storage conditions was not observed. It was thus confirmed that the sheet [4]-2 allows easy handling.

### Light resistance test

Each specimen had a total light transmittance of 91% after applying light, and a change from the initial value was not observed. A difference in total light transmittance due to the difference in sheet storage conditions was not observed.

### Heat resistance test 1

Each specimen had a total light transmittance of 91% after storage, and a change from the initial value was not observed (i.e., each specimen exhibited excellent heat resistance). A difference in total light transmittance due to the difference in sheet storage conditions was not observed.

### Heat resistance test 2

Each specimen did not show displacement, discoloration, air bubbles, delamination, and the like (i.e., each specimen exhibited excellent heat resistance). A difference due to the difference in sheet storage conditions was not observed.

### Low-temperature resistance test

The glass of each specimen broke, but the fragments remained bonded to the sheet [4]-2, and penetration of the steel ball did not occur. A difference due to the difference in sheet storage conditions was not observed.

### Example 3

### Steps 1 and 2 (synthesis of hydrogenated block copolymer [2]-3)

88 parts of pellets of a hydrogenated block copolymer [2]-3 were obtained in the same manner as in Example 1 (steps 1 and 2), except that 25.0 parts of styrene, 50.0 parts of liquefied butadiene (that was used instead of isoprene), and 25.0 parts of styrene were sequentially added to the reaction system, and polymerized as the monomers (step 1). The resulting hydrogenated block copolymer [2]-3 had a weight average molecular weight (Mw) of 64,000 and a molecular weight distribution (Mw/Mn) of 1.11. The hydrogenation rate was about 100%.

### Step 3 (synthesis of hydrogenated block copolymer [3]-3)

98 parts of pellets of a hydrogenated block copolymer [3]-3 were obtained in the same manner as in Example 1 (step 3), except that the hydrogenated block copolymer [2]-3 was used instead of the hydrogenated block copolymer [2]-1. The pellets of the hydrogenated block copolymer [3]-3 thus obtained were analyzed in the same manner as in Example 1 (step 3). It was thus confirmed that 1.8 parts of vinyltrimethoxysilane was bonded to 100 parts of the hydrogenated block copolymer [2]-3.

### Step 4 (molding of sheet [4]-3)

A sheet [4]-3 having a thickness of 600 µm and a width of 500 mm was molded in the same manner as in Example 1 (step 4), except that the hydrogenated block copolymer [3]-3 was used instead of the hydrogenated block copolymer [3]-1. The resulting sheet [4]-3 was wound around a roll.

### Step 5 (storage)

The resulting sheet [4]-3 was cut to a size of 250×250 mm to prepare two specimens. The specimens were respectively stored in the environment (1) and the environment (2) in the same manner as in Example 1 (see "Step 5 (storage)"). The specimen stored in the environment (1) is hereinafter referred to as "sheet [4]-3(1)", and the specimen stored in the environment (2) is hereinafter referred to as "sheet [4]-3(2)".

### Step 6 (production of laminated glass)

Laminated glass specimens were produced in the same manner as described above using the sheet [4]-3(1) and the sheet [4]-3(2), respectively. The adhesion test (adhesion to glass sheet), light transmittance measurement, the light resistance test, the heat resistance test 1, the heat resistance test 2, and the low-temperature resistance test were performed using the resulting laminated glass specimens. The results are described below.

### Adhesion test (adhesion to glass sheet)

The laminated glass specimen produced using the sheet [4]-3(1) and the laminated glass specimen produced using the sheet [4]-3(2) had a peel strength of 20 N/cm or more (i.e., exhibited excellent adhesion) after the vacuum lamination process and after being subjected to the high-temperature/high-humidity environment (85°C, 85%RH) for 1000 hours. It was thus confirmed that it is unnecessary to adjust the water content and the like before bonding the sheet [4]-3 to glass, and the sheet [4]-3 allows easy handling.

### Light transmittance

Each specimen had a total light transmittance of 91%, and a difference in total light transmittance due to the difference in sheet storage conditions was not observed. It was thus confirmed that the sheet [4]-3 allows easy handling.

### Light resistance test

Each specimen had a total light transmittance of 91% after applying light, and a change from the initial value was not observed. A difference in total light transmittance due to the difference in sheet storage conditions was not observed.

### Heat resistance test 1

Each specimen had a total light transmittance of 91% after storage, and a change from the initial value was not observed (i.e., each specimen exhibited excellent heat resistance). A difference in total light transmittance due to the difference in sheet storage conditions was not observed.

### Heat resistance test 2

Each specimen did not show displacement, discoloration, air bubbles, delamination, and the like (i.e., each specimen exhibited excellent heat resistance). A difference due to the difference in sheet storage conditions was not observed.

### Low-temperature resistance test

The glass of each specimen broke, but the fragments remained bonded to the sheet [4]-3, and penetration of the steel ball did not occur. A difference due to the difference in sheet storage conditions was not observed.

### Example 4

The sheet [4]-1 (thickness: 600 µm) obtained in Example 1 (step 4) was cut to obtain two sheets having a width of 200 mm and a length of 200 mm. A stainless steel perforated metal (material: SUS304, thickness: 0.3 mm, round hole diameter: 1.5 mm, open area: 22.7%) was placed between the two sheets. The resulting laminate was placed between two white glass sheets (sheet glass) having a thickness of 3.2 mm, a width of 200 mm, and a length of 200 mm. After performing vacuum deaeration at 150°C for 5 minutes using the vacuum laminator, the sheets and the glass sheets were pressure-bonded for 5 minutes under vacuum, and then pressure-bonded at 170°C for 10 minutes under vacuum to prepare laminated glass. No defects (e.g., air bubbles) were observed in the perforated part, and the laminated glass had an excellent external appearance.

### Heat cycle test

The laminated glass was subjected to a heat cycle test in 200 cycles (one cycle: -40°C for 30 minutes and 90°C for 30 minutes). The laminated glass subjected to the heat cycle test was observed with the naked eye to evaluate the external appearance (e.g., bonding surface delamination and cracks). It was thus confirmed that no abnormalities occurred.

### Comparative Example 1

### Steps 1 and 2 (synthesis of hydrogenated block copolymer [2]-4)

92 parts of pellets of a hydrogenated block copolymer [2]-4 were obtained in the same manner as in Example 1 (steps 1 and 2), except that 10.0 parts of styrene, 0.50 parts of n-butyllithium (15% cyclohexane solution), 80.0 parts of isoprene, and 10.0 parts of styrene were sequentially added to the reaction system, and polymerized as the monomers (step 1). The resulting hydrogenated block copolymer [2]-4 had a weight average molecular weight (Mw) of 87,000 and a molecular weight distribution (Mw/Mn) of 1.17. The hydrogenation rate was about 100%.

### Step 3 (synthesis of hydrogenated block copolymer [3]-4)

98 parts of pellets of a hydrogenated block copolymer [3]-4 were obtained in the same manner as in Example 1 (step 3), except that the hydrogenated block copolymer [2]-4 was used instead of the hydrogenated block copolymer [2]-1. The pellets of the hydrogenated block copolymer [3]-4 thus obtained were analyzed in the same manner as in Example 1 (step 3). It was thus confirmed that 1.8 parts of vinyltrimethoxysilane was bonded to 100 parts of the hydrogenated block copolymer [2]-4.

### Step 4 (molding of sheet [4]-4)

A sheet [4]-4 was molded in the same manner as in Example 1 (step 4), except that the hydrogenated block copolymer [3]-4 was used instead of the hydrogenated block copolymer [3]-1, dissolved air was not removed by heating, and the roll temperature was set to room temperature. The resulting sheet [4]-4 was wound around a roll through a PET film (release film) having a thickness of 100 µm.

### Step 5 (storage)

The resulting sheet [4]-4 was cut to a size of 250×250 mm to prepare two specimens in which the PET film (release film) having a thickness of 100 µm was provided. The specimens were respectively stored in the environment (1) and the environment (2) in the same manner as in Example 1 (see "Step 5 (storage)"). The specimen stored in the environment (1) is hereinafter referred to as "sheet [4]-4(1)", and the specimen stored in the environment (2) is hereinafter referred to as "sheet [4]-4(2)".

### Step 6 (production of laminated glass)

Laminated glass specimens were produced in the same manner as described above using the sheet [4]-4(1) and the sheet [4]-4(2), respectively. The adhesion test (adhesion to glass sheet), light transmittance measurement, the light resistance test, the heat resistance test 1, the heat resistance test 2, and the low-temperature resistance test were performed using the resulting laminated glass specimens.

### Adhesion test (adhesion to glass sheet)

The laminated glass specimen produced using the sheet [4]-4(1) and the laminated glass specimen produced using the sheet [4]-4(2) had a peel strength of 20 N/cm or more (i.e., exhibited excellent adhesion) after the vacuum lamination process and after being subjected to the high-temperature/high-humidity environment (85°C, 85%RH) for 1000 hours. It was thus confirmed that it is unnecessary to adjust the water content and the like before bonding the sheet [4]-4 to glass, and the sheet [4]-4 allows easy handling.

### Light transmittance

Each specimen had a total light transmittance of 91%, and a difference in total light transmittance due to the difference in sheet storage conditions was not observed. It was thus confirmed that the sheet [4]-4 allows easy handling.

### Light resistance test

Each specimen had a total light transmittance of 91% after applying light, and a change from the initial value was not observed. A difference in total light transmittance due to the difference in sheet storage conditions was not observed.

### Heat resistance test 1

Each specimen had a total light transmittance of 91% after storage, and a change from the initial value was not observed (i.e., each specimen exhibited excellent heat resistance). A difference in total light transmittance due to the difference in sheet storage conditions was not observed.

### Heat resistance test 2

The glass sheet of each specimen was displaced (i.e., each specimen exhibited insufficient heat resistance). A difference due to the difference in sheet storage conditions was not observed.

### Low-temperature resistance test

The glass of each specimen broke, but the fragments remained bonded to the sheet [4]-4, and penetration of the steel ball did not occur. A difference due to the difference in sheet storage conditions was not observed.

### Comparative Example 2

### Steps 1 and 2 (synthesis of hydrogenated block copolymer [2]-5)

96 parts of pellets of a hydrogenated block copolymer [2]-5 were obtained in the same manner as in Example 1 (steps 1 and 2), except that 37.5 parts of styrene, 25.0 parts of isoprene, and 37.5 parts of styrene were sequentially added to the reaction system, and polymerized as the monomers (step 1). The resulting hydrogenated block copolymer [2]-5 had a weight average molecular weight (Mw) of 66,300 and a molecular weight distribution (Mw/Mn) of 1.10. The hydrogenation rate was about 100%.

### Step 3 (synthesis of hydrogenated block copolymer [3]-5)

98 parts of pellets of a hydrogenated block copolymer [3]-5 were obtained in the same manner as in Example 1 (step 3), except that the hydrogenated block copolymer [2]-5 was used instead of the hydrogenated block copolymer [2]-1. The pellets of the hydrogenated block copolymer [3]-5 thus obtained were analyzed in the same manner as in Example 1 (step 3). It was thus confirmed that 1.6 parts of vinyltrimethoxysilane was bonded to 100 parts of the hydrogenated block copolymer [2]-5.

### Step 4 (molding of sheet [4]-5)

A sheet [4]-5 was molded in the same manner as in Example 1 (step 4), except that the hydrogenated block copolymer [3]-5 was used instead of the hydrogenated block copolymer [3]-1. The resulting sheet [4]-5 was wound around a roll.

### Step 5 (storage)

The resulting sheet [4]-5 was cut to a size of 250×250 mm to prepare two specimens. The specimens were respectively stored in the environment (1) and the environment (2) in the same manner as in Example 1. The specimen stored in the environment (1) is hereinafter referred to as "sheet [4]-5(1)", and the specimen stored in the environment (2) is hereinafter referred to as "sheet [4]-5(2)".

### Step 6 (production of laminated glass)

Laminated glass specimens were produced in the same manner as described above using the sheet [4]-5(1) and the sheet [4]-5(2), respectively. The adhesion test (adhesion to glass sheet), light transmittance measurement, the light resistance test, the heat resistance test 1, the heat resistance test 2, and the low-temperature resistance test were performed using the resulting laminated glass specimens.

### Adhesion test (adhesion to glass sheet)

The laminated glass specimen produced using the sheet [4]-5(1) and the laminated glass specimen produced using the sheet [4]-5(2) had a peel strength (initial value) of about 15 N/cm after the vacuum lamination process, and the sheet broke at the delamination surface. The peel strength was 2 N/cm or less when each laminated glass specimen was subjected to the high-temperature/high-humidity environment (85°C, 85%RH) for 1000 hours.

### Light transmittance

Each specimen had a total light transmittance of 91%, and a difference in total light transmittance due to the difference in sheet storage conditions was not observed.

### Heat resistance test 2

Each specimen did not show displacement, discoloration, air bubbles, delamination, and the like (i.e., each specimen exhibited excellent heat resistance). A difference due to the difference in sheet storage conditions was not observed.

### Low-temperature resistance test

The glass and the sheet of each specimen broke, and penetration of the steel ball occurred.

The following were confirmed from the results obtained in the examples and the comparative examples.

Laminated glass obtained using the hydrogenated block copolymer [3] allows easy handing, exhibits excellent adhesion, light resistance, heat resistance, and transparency, and can maintain high adhesion even in a high temperature/high humidity environment (Examples 1 to 3).

When using a polymer in which the content of the polymer block [A] that includes a repeating unit derived from an aromatic vinyl compound as the main component is low, the resulting laminated glass exhibits low heat resistance and low durability (Comparative Example 1).

When using a polymer in which the content of the polymer block [A] that includes a repeating unit derived from an aromatic vinyl compound as the main component is high, the resulting laminated glass exhibits high heat resistance, but exhibits low flexibility and low breakage (fracture) resistance (Comparative Example 2).

### INDUSTRIAL APPLICABILITY

The laminated glass according to the embodiments of the invention is useful as decorative glass, design glass, building window glass, blocking glass, roof glass, automotive windshield/sunroof glass, and the like.

## Claims

1. Laminated glass obtained by integrally bonding glass sheets through an adhesive, the adhesive comprising a hydrogenated block copolymer [3] obtained by introducing an alkoxysilyl group into a hydrogenated block copolymer [2] that is obtained by hydrogenating 90% or more of carbon-carbon unsaturated bonds included in the main chain, the side chain, and the aromatic ring of a block copolymer [1] that comprises at least two polymer blocks [A] and at least one polymer block [B], the polymer block [A] comprising a repeating unit derived from an aromatic vinyl compound as a main component, the polymer block [B] comprising a repeating unit derived from a linear conjugated diene compound as a main component, and a ratio (wA:wB) of a weight fraction wA of the polymer block [A] in the block copolymer [1] to a weight fraction wB of the polymer block [B] in the block copolymer [1] being 30:70 to 60:40.

2. The laminated glass according to claim 1, wherein the adhesive further comprises a hindered amine-based light stabilizer in an amount of 0.02 to 2.5 parts by weight based on 100 parts by weight of the hydrogenated block copolymer [3].

3. The laminated glass according to claim 1, wherein the adhesive further comprises a UV absorber in an amount of 0.02 to 1 part by weight based on 100 parts by weight of the hydrogenated block copolymer [3].

4. A method comprising using a hydrogenated block copolymer [3] as an adhesive for laminated glass, the hydrogenated block copolymer [3] being obtained by introducing an alkoxysilyl group into a hydrogenated block copolymer [2] that is obtained by hydrogenating 90% or more of unsaturated bonds of a block copolymer [1] that comprises at least two polymer blocks [A] and at least one polymer block [B], the
polymer block [A] comprising a repeating unit derived from an aromatic vinyl compound as a main component, the polymer block [B] comprising a repeating unit derived from a linear conjugated diene compound as a main component, and a ratio (wA:wB) of a weight fraction wA of the polymer block [A] in the block copolymer [1] to a weight fraction wB of the polymer block [B] in the block copolymer [1] being 30:70 to 60:40.

## Patentansprüche

1. Verbundglas erhalten durch integrales Verbinden von Glasplatten mittels eines Klebstoffs, der Klebstoff umfassend ein hydriertes Blockcopolymer [3] erhalten durch Einführen einer Alkoxysilylgruppe in ein hydriertes Blockcopolymer [2], das erhalten wird durch Hydrieren von 90% oder mehr der ungesättigten Kohlenstoff-Kohlenstoffbindungen enthaltend in der Hauptkette, der Seitenkette und dem aromatischen Ring eines Blockcopolymers [1], welches mindestens zwei Polymerblöcke [A] und mindestens einen Polymerblock [B] umfasst, der Polymerblock [A] umfassend eine Wiederholeinheit abgeleitet von einer aromatischen Vinylverbindung als Hauptkomponente, der Polymerblock [B] umfassend eine Wiederholeinheit abgeleitet von einer linear konjugierten Dienverbindung als eine Hauptkomponente, und ein Verhältnis (wA:wB) eines Gewichtsanteils wA des Polymerblocks [A] in dem Blockcopolymer [1] zu einem Gewichtsanteil wB des Polymerblocks [B] in dem Blockcopolymer [1] von 30:70 bis 60:40.

2. Das Verbundglas gemäß Anspruch 1, wobei der Klebstoff ferner einen gehinderten Amin-basierten Lichtstabilisator in einer Menge von 0,02 bis 2,5 Gewichtsteilen basierend auf 100 Gewichtsteilen der hydrierten Blockcopolymers [3] umfasst.

3. Das Verbundglas gemäß Anspruch 1, wobei der Klebstoff ferner einen UV-Absorber in einer Menge 0.02 bis 1 Gewichtsteilen basierend auf 100 Gewichtsteilen des hydrierten Blockcopolymers [3] umfasst.

4. Ein Verfahren umfassend die Verwendung eines hydrierten Blockcopolymers [3] als einen Klebstoff für Verbundglas, das hydrierte Blockcopolymer [3] erhalten durch ein Einführen einer Alkoxysilylgrupe in ein hydriertes Blockcopolymer [2], das erhalten wird durch Hydrieren von 90% oder mehr der ungesättigten Bindungen eines Blockcopolymers [1], welches mindestens zwei Polymerblöcke [A] und mindestens einen Polymerblock [B] umfasst, der Polymerblock [A] umfassend eine Wiederholeinheit abgeleitet von einer aromatischen Vinylverbindung als eine Hauptkomponente, der Polymerblock [B] umfassend eine Wiederholeinheit abgeleitet von einer linear konjugierten Dienverbindung als eine Hauptkomponente, und ein Verhältnis (wA:wB) eines Gewichtsanteils wA des Polymerblocks [A] in dem Blockcopolymer [1] zu einem Gewichtsanteil wB des Polymerblocks [B] in dem Blockcopolymer [1] von 30:70 bis 60:40.

## Revendications

1. Stratifié de verre obtenu en collant intégralement des feuilles de verre à l'aide d'un adhésif, l'adhésif comprenant un copolymère séquencé hydrogéné [3] obtenu par introduction d'un groupe alcoxysilyle dans un copolymère séquencé hydrogéné [2] qui est obtenu par hydrogénation de 90 % ou plus de liaisons carbone-carbone insaturées incluses dans la chaîne principale, la chaîne latérale et le cycle aromatique d'un copolymère séquencé [1] qui comprend au moins deux séquences de polymère [A] et au moins une séquence de polymère [B], la séquence de polymère [A] comprenant un motif répétitif dérivé d'un composé vinylaromatique en tant que composant principal, la séquence de polymère [B] comprenant un motif répétitif dérivé d'un composé diène conjugué linéaire en tant que composant principal, et un rapport (wA/wB) d'une fraction pondérale wA de la séquence de polymère [A] dans le copolymère séquencé [1] à une fraction pondérale wB de la séquence de polymère [B] dans le copolymère séquencé [1] étant de 30/70 à 60/40.

2. Stratifié de verre selon la revendication 1, dans lequel l'adhésif comprend en outre un photostabilisant à base d'amine encombrée en une quantité de 0,02 à 2,5 parties en poids sur la base de 100 parties en poids du copolymère séquencé hydrogéné [3].

3. Stratifié de verre selon la revendication 1, dans lequel l'adhésif comprend en outre un absorbeur UV en une quantité de 0,02 à 1 partie en poids sur la base de 100 parties en poids du copolymère séquencé hydrogéné [3].

4. Procédé comprenant l'utilisation d'un copolymère séquencé hydrogéné [3] en tant qu'adhésif pour stratifié de verre, le copolymère séquencé hydrogéné [3] étant obtenu par introduction d'un groupe alcoxysilyle dans un copolymère séquencé hydrogéné [2] qui est obtenu par hydrogénation de 90 % ou plus de liaisons insaturées d'un copolymère séquencé [1] qui comprend au moins deux séquences de polymère [A] et au moins une séquence de polymère [B], la séquence de polymère [A] comprenant un motif répétitif dérivé d'un composé vinylaromatique en tant que composant principal, la séquence de polymère [B] comprenant un motif répétitif dérivé d'un composé diène conjugué linéaire en tant que composant principal, et un rapport (wA/wB) d'une fraction pondérale wA de la séquence de polymère [A] dans le copolymère séquencé [1] à une fraction pondérale wB de la séquence de polymère [B] dans le copolymère séquencé [1] étant de 30/70 à 60/40.
